# EUROPEAN PATENT APPLICATION

(11) **EP 3 660 966 A1**
(43) Date of publication of application: **03.06.2020**
(21) Application number: 18837829.3
(22) Date of filing: 26.07.2018
(51) Int. Cl.: H01M 8/04, H01M 8/04228, H01M 8/04303, H02J 13/00, H04Q 9/00

(54) **FUEL-CELL SYSTEM, EQUIPMENT MANAGEMENT METHOD, MANAGEMENT DEVICE, AND EQUIPMENT MANAGEMENT SYSTEM**

(30) Priority: 28.07.2017 JP 2017146468
(71) Applicant: Kyocera Corporation, Kyoto-shi Kyoto 612-8501 (JP)
(72) Inventor: AIKAWA, Shinji, Kyoto-shi Kyoto 612-8501 (JP); BABA, Masahiro, Kyoto-shi Kyoto 612-8501 (JP)
(74) Representative: TBK
(86) International application number: PCT/JP2018/028112
(87) International publication number: WO 2019/022199

(57) **Abstract**

A fuel cell system comprises a controller configured to manage information related to a number of stop times of the fuel cell system, and an output unit configured to output the information related to the number of stop times.

## Description

### TECHNICAL FIELD

The present invention relates to a fuel cell system, an equipment management method, a management apparatus, and an equipment management system.

### BACKGROUND ART

An equipment management system that manages various pieces of information on a plurality of pieces of equipment is known. The various pieces of information include basic information on equipment and maintenance information. The basic information includes, for example, an installation date, a predetermined service life, a rated power consumption, and the like. The maintenance information includes a history of past maintenance (for example, Patent Literature 1).

### CITATION LIST

### PATENT LITERATURE

Patent Literature 1: Japanese application publication No. 2005-182399

### SUMMARY OF INVENTION

A fuel cell system according to a first feature comprises a controller configured to manage information related to a number of stop times of the fuel cell system, and an output unit configured to output the information related to the number of stop times.

An equipment management method according to a second feature comprises a step A of managing information related to a number of stop times of a fuel cell system, and a step B of outputting the information related to the number of stop times.

A management apparatus according to a third feature is connected to a fuel cell system through at least one of a narrow area network and a wide area network. The management apparatus comprises a receiver configured to receive, from the fuel cell system, a message indicating information related to a number of stop times.

An equipment management system according to a forth feature comprises a fuel cell system, and a management apparatus connected to the fuel cell system through at least one of a narrow area network and a wide area network. The equipment management system comprises a controller configured to manage information related to a number of stop times of the fuel cell system, and an output unit configured to transmit, to the management apparatus, a message indicating the information related to the number of stop times.

### BRIEF DESCRIPTION OF DRAWINGS

Fig. 1 is a diagram illustrating an equipment management system 100 according to an embodiment.
Fig. 2 is a diagram illustrating a fuel cell system 310 according to the embodiment.
Fig. 3 is a diagram illustrating an equipment management apparatus 200 according to the embodiment.
Fig. 4 is a view illustrating an equipment management method according to an embodiment.

### DESCRIPTION OF EMBODIMENTS

Hereinafter, an embodiment will be described. Note that, in description of the drawings below, the same or similar sections are attached with the same or similar reference signs. However, it should be noted that the drawings are schematic drawings, and a ratio of each dimension and the like may be different from actual ones.

Accordingly, a specific dimension and the like need to be determined in consideration of the description below. Further, between mutual drawings, there may also be a case where sections have dimensions that are different from each other in relationships or ratios as a matter of course.

### [Outline of disclosure]

Incidentally, a case where equipment managed by an equipment management system is a fuel cell system is considered. The fuel cell system is a system that may be operated by a user. On the one hand, when the number of stop times of the fuel cell system exceeds an upper limit, there is a possibility that the fuel cell system cannot be controlled appropriately.

In the following disclosure, a fuel cell system, an equipment management method, a management apparatus, and an equipment management system to make it possible to appropriately grasp a state of a fuel cell system will be described in order to solve the above-described problem.

### [Embodiment]

### (Equipment management system)

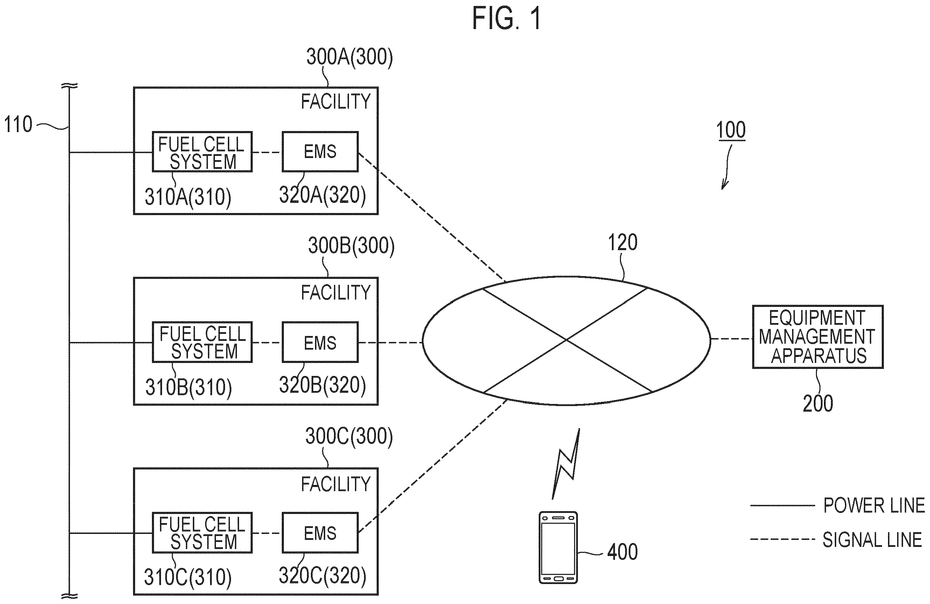

In the following, an equipment management system according to the embodiment will be described. As illustrated in Fig. 1, an equipment management system 100 includes equipment management apparatus 200, a facility 300, and a predetermined terminal 400. In Fig. 1, a facility 300A to a facility 300C are illustrated as examples of the facility 300. The equipment management apparatus 200 and the facility 300 are connected to a network 120. The network 120 provides a line (wide area network) between the equipment management apparatus 200 and the facility 300 (more specifically, router provided in facility 300). The network 120 may provide a line between the equipment management apparatus 200 and the predetermined terminal 400. For example, the network 120 may be the Internet or a mobile communication network. The network 120 may provide a dedicated line such as a VPN. The network 120 may be considered as an out-of-house network in a point that a line to perform communication with an apparatus provided outside the facility 300 is provided.

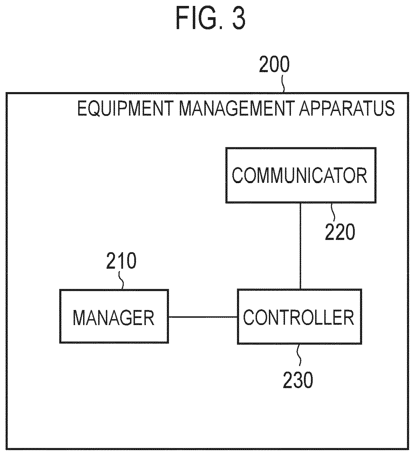

The equipment management apparatus 200 manages equipment provided in the facility 300. A detail of the equipment management apparatus 200 will be described later (see Fig. 3).

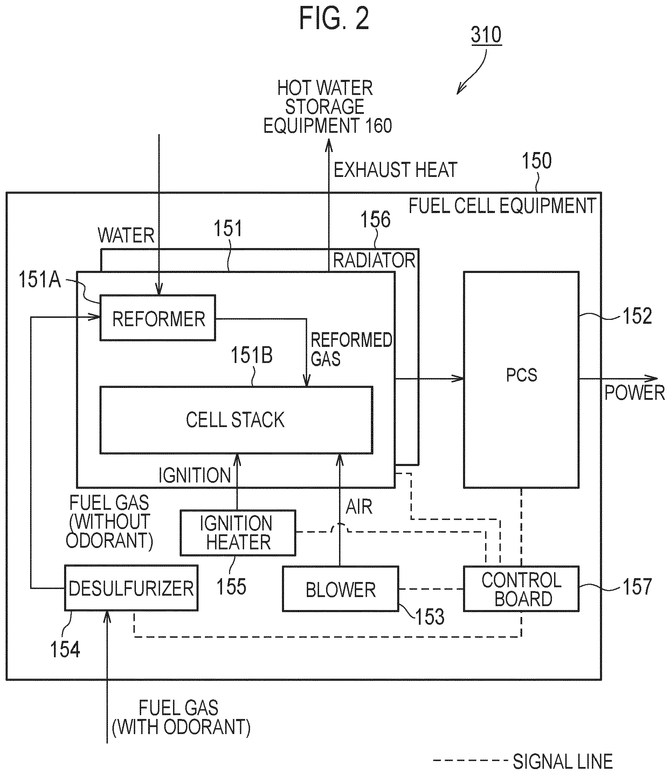

The facility 300 includes a fuel cell system 310 and an EMS 320. The fuel cell system 310 includes equipment to generate power by using fuel gas. A detail of the fuel cell system 310 will be described later (see Fig. 2). The EMS 320 is equipment to control equipment provided in the facility 300 (energy management system). Here, a line between the fuel cell system 310 and the EMS 320 is provided by a narrow area network. For example, the narrow area network is a network configured by a router provided in the facility 300. The narrow area network may be a short-range communication network such as Bluetooth (registered trademark) and a Wi-SAN. The narrow area network may be considered as an in-house network in a point that a line to perform communication with an apparatus provided in the facility 300 is provided. However, an apparatus provided in the facility 300 may not be provided inside in the facility 300 and may be provided in a site of the facility 300.

The facility 300 may have load equipment that consumes power. The load equipment is, for example, air conditioning equipment, lighting equipment, audio visual (AV) equipment, and the like. The facility 300 may have a distributed power supply other than the fuel cell system 310. The distributed power supply may include, for example, equipment that generates power using natural energy, such as solar light, wind power, geothermal energy, and may include storage battery equipment.

The predetermined terminal 400 may be a terminal held by an administrator who manages equipment provided in the facility 300. The predetermined terminal 400 may be a terminal held by a worker who performs maintenance of the equipment provided in the facility 300. The predetermined terminal 400 may be a terminal that belongs to a business operator such as a power producer, a power transmitter/distributor, or a retailer. The predetermined terminal 400 may be a smartphone, a tablet terminal, or a personal computer. The predetermined terminal 400 may be considered as an example of a management apparatus connected to the fuel cell system 310 through at least any one of a narrow area network and a wide area network.

Here, the equipment management system 100 may have a power management server. The power management server transmits, for example, a power flow control message requesting control of a power flow amount from a power grid 110 to the facility 300, a reverse power flow control message requesting control of a reverse power flow amount from the facility 300 to the power grid 110, a power control message requesting control of the fuel cell system 310 (distributed power supply) provided in the facility 300, and the like to the facility 300.

In the embodiment, the equipment management apparatus 200 is an example of a management apparatus connected to the fuel cell system 310 through the wide area network. The EMS 320 is an example of a management apparatus connected to the fuel cell system 310 through the narrow area network.

### (Fuel cell system)

Hereinafter, a fuel cell system according to the embodiment will be described. Fig. 2 is a diagram illustrating the fuel cell system 310 according to the embodiment. The fuel cell system 310 includes at least fuel cell equipment 150. The fuel cell system 310 may include hot water storage equipment 160. Here, the fuel cell system 310 will be described as being a cogeneration system including both the fuel cell equipment 150 and the hot water storage equipment 160.

The fuel cell equipment 150 is equipment that generates power using fuel gas. The hot water storage equipment 160 is equipment that generates hot water or maintains a water temperature using fuel gas. Specifically, the hot water storage equipment 160 has a hot water storage tank, warms water supplied from the hot water storage tank by heat generated by combustion of fuel or exhaust heat generated by power generation of the fuel cell equipment 150, and returns the warmed water to the hot water storage tank.

As illustrated in Fig. 2, the fuel cell equipment 150 has a fuel cell 151, a PCS 152, a blower 153, a desulfurizer 154, an ignition heater 155, a radiator 156, and a control substrate 157.

The fuel cell 151 is equipment that generates power using fuel gas. Specifically, the fuel cell 151 includes a reformer 151A and a cell stack 151B.

The reformer 151A generates reformed gas from fuel from which an odorant is removed by the desulfurizer 154 described later. The reformed gas is a gas including hydrogen and carbon monoxide.

The cell stack 151B generates power by a chemical reaction between air (oxygen) supplied from the blower 153 described later and the reformed gas. Specifically, the cell stack 151B has a structure in which a plurality of cells is stacked. Each cell has a structure in which an electrolyte is sandwiched between a fuel electrode and an air electrode. The reformed gas (hydrogen) is supplied to the fuel electrode, and air (oxygen) is supplied to the air electrode. A chemical reaction of the reformed gas (hydrogen) and the air (oxygen) occurs in the electrolyte to generate power (DC power) and heat.

The PCS 152 is equipment (power conditioning system) that converts DC power output from the fuel cell 151 into AC power.

The blower 153 supplies air to the fuel cell 151 (cell stack 151B). The blower 153 is configured with, for example, a fan. The blower 153 cools the cell stack 151B so that a temperature of the cell stack 151B does not exceed an upper limit of an allowable temperature.

The desulfurizer 154 removes the odorant contained in fuel gas supplied from the outside. The fuel gas may be city gas or propane gas.

The ignition heater 155 is a heater that ignites fuel gas (hereinafter, unreacted gas) that does not react chemically in the cell stack 151B and maintains the temperature of the cell stack 151B at a high temperature. That is, the ignition heater 155 ignites unreacted gas leaking from an opening of each cell constituting the cell stack 151B. It should be noted that the ignition heater 155 preferably ignites unreacted gas in a case where the unreacted gas is not combusted (for example, at the time of starting the fuel cell equipment 150). Then, after the combustion of the unreacted gas starts, the temperature of the cell stack 151B is maintained at a high temperature as the combustion of the unreacted gas which overflows slightly from the cell stack 151B continues.

The radiator 156 cools water (hereinafter, reflux water) flowing from the hot water storage equipment 160 to the fuel cell equipment 150, so that a temperature of the reflux water does not exceed an upper limit of an allowable temperature. The radiator 156 may also cool the cell stack 151B so that the temperature of the cell stack 151B does not exceed an upper limit of an allowable temperature.

The control substrate 157 is a substrate, on which a circuit for controlling the fuel cell 151, the PCS 152, the blower 153, the desulfurizer 154, the ignition heater 155, and the control substrate 157 is mounted.

The reformer 151A, the blower 153, the desulfurizer 154, the ignition heater 155, and the control substrate 157 are an example of auxiliaries that assist operation of the cell stack 151B. Further, part of the PCS 152 may be treated as auxiliaries.

An operating state of the fuel cell system 310 includes a power generation state (also referred to as during power generation), a stop state (also referred to as during stop), a start state (also referred to as during start), a stopping operation state (also referred to as during stopping operation), an idle state (also referred to as during idling), and the like.

The power generation state is a state in which power generation is performed by the fuel cell 151. The start state is a state from the stop state to the power generation state. The stop state is a state in which operation of the fuel cell 151 is stopped. The stopping operation state is a state from the power generation state to the stop state. The idle state is a state in which power is not output from the fuel cell system 310, but the temperature of the cell stack 151B is maintained at a predetermined temperature. The predetermined temperature may be approximately the same as a power generation temperature (for example, 650°C to 1000°C) of the cell stack 151B in the power generation state, and may be a temperature (for example, 450°C to 600°C) lower than the power generation temperature. In the idle state, power of the auxiliaries may be covered by power output from the fuel cell 151, may be covered by power supplied from another distributed power supply (for example, equipment or storage battery equipment that generates power using natural energy), or may be covered by power supplied from the power grid 110.

In the example illustrated in Fig. 2, a control board 157 is provided in fuel cell equipment 150. However, an embodiment is not limited to this. The fuel cell system 310 includes a remote controller to receive user operation, and the control board 157 may be provided in the remote controller. Alternatively, a function included in the control board 157 may be realized by both of a board provided in the fuel cell equipment 150 and the remote controller. Moreover, the control board 157 may be considered as a part of a PCS 152.

In the embodiment, the control board 157 configures a controller to manage information related to the number of stop times of the fuel cell system 310. The controller includes a CPU and a memory. The control board 157 configures an output unit to output information related to the number of stop times. The output unit may include a communication module. The output unit may include at least any one of an image processing IC and a sound processing IC.

Here, a stop of the fuel cell system 310 includes a normal stop and an abnormal stop. The normal stop is an operation of stopping an operation of the fuel cell system 310 by stopping power generation by a fuel cell 151 without stopping a blower 153 or a radiator 156 while lowering a temperature of a cell stack 151B with the blower 153 or the radiator 156. On the one hand, the abnormal stop is an operation of stopping not only power generation by the fuel cell 151 but also a whole operation of the fuel cell system 310. For example, the operation of the normal stop is an operation executed in response to a relatively small trouble or an operation executed in a periodic maintenance of the fuel cell system 310. On the one hand, the operation of the abnormal stop is, for example, an operation executed in response to a relatively serious trouble or an operation executed in a state in which the normal stop cannot be performed.

Moreover, a stop of the fuel cell system 310 includes a manual stop and an automatic stop. The manual stop is a stop caused by user operation. The automatic stop is a stop caused by a stop function included in the fuel cell system 310. The automatic stop is an automatic stop by the fuel cell system 310 and does not need user operation. The manual stop includes the above-described normal stop and abnormal stop. Similarly, the automatic stop includes the above-described normal stop and abnormal stop. Moreover, a stop of the fuel cell system 310 may include an operation of stopping the fuel cell system 310 by a remote operation from the equipment management apparatus 200. Such an operation may be counted as a manual stop or as an automatic stop.

The abnormal stop may be, for example, a stop executed in response to a phenomenon in which concentration of gas in the fuel cell system 310 is out of a predetermined range, a stop executed in response to a phenomenon in which concentration of CO in the fuel cell system 310 exceeds an upper limit threshold, or a stop executed in response to a phenomenon in which a temperature of a part provided in the fuel cell system 310 (such as cell stack or fuel catalyst) exceeds an upper limit threshold (high-temperature trouble). The concentration of gas, the concentration of CO, and the temperature of a part may be detected by a sensor provided in the fuel cell system 310. The abnormal stop may be an automatic stop in which the fuel cell system 310 automatically stops according to a result of detection by the sensor, or a manual stop in which a result of detection by the sensor is notified to a user and the fuel cell system 310 is stopped by user operation. Moreover, the abnormal stop may be a stop executed in response to a trouble of a part provided in the fuel cell system 310 (such as sensor, blower 153, or radiator 156), for example. The abnormal stop may be an automatic stop in which the fuel cell system 310 automatically stops according to a detection result of a trouble of a part, or a manual stop in which a result of detection of a trouble of a part is notified to a user and the fuel cell system 310 is stopped by user operation. The abnormal stop may be also referred to as a shut-down stop.

The normal stop is a stop other than the abnormal stop. The normal stop may be, for example, a stop executed in response to a phenomenon in which a temperature of a part provided in the fuel cell system 310 (such as cell stack) is lower than a lower limit threshold (low-temperature trouble). The temperature of a part may be detected by a sensor provided in the fuel cell system 310. The normal stop may be an automatic stop in which the fuel cell system 310 automatically stops according to a result of detection by the sensor, or a manual stop in which a result of detection by the sensor is notified to a user and the fuel cell system 310 is stopped by user operation. Moreover, the normal stop may be a stop executed in response to a communication trouble. The communication trouble may be a communication trouble between parts, which are provided in the fuel cell system 310, such as the PCS 152, the control board 157, and the remote controller or a communication trouble between the fuel cell system 310 and the EMS 320. The communication trouble may be a trouble in which an incommunicable state is kept for a predetermined period or longer. The normal stop may be an automatic stop in which the fuel cell system 310 automatically stops according to a result of detection of a communication trouble, or a manual stop in which a result of detection of a communication trouble is notified to a user and the fuel cell system 310 is stopped by user operation. The normal stop may be a stop executed in response to a trouble in a power grid 110. The trouble in the power grid 110 may be a blackout or may be a trouble in a grid voltage and a grid frequency. The normal stop may be an automatic stop in which the fuel cell system 310 automatically stops according to a result of detection of a trouble in the power grid 110, or a manual stop in which a result of detection of a trouble in the power grid 110 is notified to a user and the fuel cell system 310 is stopped by user operation.

The fuel cell system 310 includes the fuel cell equipment 150 in which an upper limit of the number of stop times is set. The upper limit of the number of stop times may be an upper limit that varies depending on a type of a stop. For example, an upper limit of the number of normal stop times and an upper limit of the number of abnormal stop times may be set separately. An upper limit of the number of normal stop times by a manual stop and an upper limit of the number of normal stop times by an automatic stop may be set separately. An upper limit of the number of abnormal stop times by a manual stop and an upper limit of the number of abnormal stop times by an automatic stop may be set separately. The upper limit of the number of normal stop times may be larger than the upper limit of the number of abnormal stop times. The number of normal stop times may be the number of normal stop times by a manual stop, may be the number of normal stop times by an automatic stop, or may be the total number of the number of normal stop times by the manual stop and the number of normal stop times by the automatic stop. Similarly, the number of abnormal stop times may be the number of abnormal stop times by a manual stop, may be the number of abnormal stop times by an automatic stop, or may be the total number of the number of abnormal stop times by the manual stop and the number of abnormal stop times by the automatic stop.

As described above, the control board 157 manages information related to the number of stop times of the fuel cell system 310 from a moment at which the fuel cell system 310 is installed in the facility 300. The information related to the number of stop times may be the number of stop times itself. In a case where an upper limit of the number of stop times is set, information related to the number of stop times may be the remaining number of stop times which number is acquired by subtraction of the number of stop times from the upper limit of the number of stop times. Also, the information related to the number of stop times may be information including both of the number of stop times and an upper limit of the number of stop times, or may be information including both of the remaining number of stop times, which number is acquired by subtraction of the number of stop times from the upper limit of the number of stop times, and the upper limit of the number of stop times. The information related to the number of stop times may be managed separately for each stop type.

For example, in a case where the number of normal stop times and the number of abnormal stop times are not distinguished from each other, the control board 157 manages information related to the total number of the number of normal stop times and the number of abnormal stop times. On the one hand, in a case where the number of normal stop times and the number of abnormal stop times are distinguished from each other, the control board 157 separately manages information related to the number of normal stop times and information related to the number of abnormal stop times. The control board 157 may manage, as information indicating a breakdown of information related to the number of normal stop times, information related to the number of manual stop times and information related to the number of automatic stop times. Similarly, the control board 157 may manage, as information indicating a breakdown of information related to the number of abnormal stop times, information related to the number of manual stop times and information related to the number of automatic stop times.

The control board 157 may transmit, to a management apparatus (such as EMS 320) connected to the fuel cell system 310 through a narrow area network, a message indicating information related to the number of stop times (hereinafter, message about the number of stop times). The control board 157 may transmit a message about the number of stop times to a management apparatus (such as an equipment management apparatus 200) connected to the fuel cell system 310 through a wide area network. In such a case, the control board 157 may transmit a message about the number of stop times to the equipment management apparatus 200 through the EMS 320, or may transmit the message about the number of stop times to the equipment management apparatus 200 not through the EMS 320. Moreover, the control board 157 may transmit a message about the number of stop times to a predetermined terminal 400 through a narrow area network, or may transmit the message about the number of stop times to the predetermined terminal 400 through a wide area network. In such a case, the control board 157 may transmit the message about the number of stop times to the predetermined terminal 400 through both of the narrow area network and the wide area network, or may transmit the message about the number of stop times to the predetermined terminal 400 through the wide area network (such as mobile communication network) not through the narrow area network.

The control board 157 may output information related to the number of stop times to a remote controller provided in the fuel cell system 310. The control board 157 may perform control to display the information related to the number of stop times on a display of the remote controller, or may perform control to output the information related to the number of stop times from a speaker of the remote controller.

Here, the control board 157 may output the information related to the number of stop times in response to a stop of the fuel cell system 310. The control board 157 may periodically output the information related to the number of stop times. Also, the control board 157 may output the message about the number of stop times each time the fuel cell system 310 stops. The control board 157 may output the information related to the number of stop times in response to a request from a different apparatus. A different apparatus may be the equipment management apparatus 200, the EMS 320, or the predetermined terminal 400. Here, in a case where a communication system between the fuel cell system 310 and a different apparatus is ECHONET Lite, a GET command can be used as the above-described request. In a case where a communication system between the fuel cell system 310 and a different apparatus is Open ADR, an oadrCreateReport can be used as the above-described request. For example, the oadrCreateReport may be transmitted from the equipment management apparatus 200 to the EMS 320, and the GET command may be transmitted from the EMS 320 to the fuel cell system 310. The control board 157 may output information related to the number of stop times in a case where the information related to the number of stop times satisfies a predetermined condition. The predetermined condition may be, for example, the number of stop times reaching a predetermined number, or the remaining number of stop times being smaller than a predetermined number.

### (Equipment management apparatus)

Hereinafter, an equipment management apparatus according to the embodiment will be described. As illustrated in Fig. 3, the equipment management apparatus 200 includes a manager 210, a communicator 220, and a controller 230.

The manager 210 is configured with a storage medium, such as a non-volatile memory and/or an HDD, and manages information on a plurality of the facilities 300.

The manager 210 may store basic information of equipment provided in each of a plurality of the facilities 300. For example, the manager 210 stores a facility name, a facility ID, equipment name, equipment ID, an introduction year, aging, and a useful life by associating them with each other. The facility name is a name of the facility 300 where the equipment is installed. The facility ID is an identifier for identifying the facility 300. The equipment name is a name of equipment. The equipment ID is an identifier for identifying equipment. The introduction year is a year in which equipment is introduced. The aging indicates years that have passed since introduction of equipment. The useful life is determined by a manufacturer of equipment, and the like, and is information indicating a period in which equipment can be used appropriately after the equipment is introduced.

The manager 210 may store, for each of a plurality of the facilities 300, maintenance information of equipment provided in each of a plurality of the facilities 300. For example, the manager 210 stores a facility name, equipment name, a maintenance date, a maintenance outline, and a maintenance detail by associating them with each other. The manager 210 may store a facility ID and equipment ID by associating them with each other together with these pieces of information. The facility name and the equipment name are as described above. The maintenance date is a date on which maintenance is performed. The maintenance outline is information indicating an outline of maintenance, and the maintenance detail is information indicating the details of maintenance. The maintenance information according to the embodiment preferably includes at least a maintenance period (planned) for performing maintenance of equipment in the future. The maintenance information may include a maintenance period in which maintenance of equipment is performed in the past.

Here, maintenance includes, for example, an inspection to check a deterioration state of equipment, maintenance to perform small care during the inspection, repair to take measures on a malfunction of equipment, replacement to change existing equipment to new equipment, and the like.

A communicator 220 includes a communication module and performs communication with the facility 300 and the predetermined terminal 400 through the network 120. The communicator 220 receives, from the fuel cell system 310, the above described message about the number of stop times. The communicator 220 may receive the message about the number of stop times through the EMS 320 or may receive the message about the number of stop times not through the EMS 320.

A controller 230 includes a memory, a CPU, and the like and controls each configuration provided in the equipment management apparatus 200. The controller 230 may perform control of arranging maintenance of the fuel cell system 310 on the basis of a state of the fuel cell system 310.

### (Equipment management method)

In the following, an equipment management method according to the embodiment will be described.

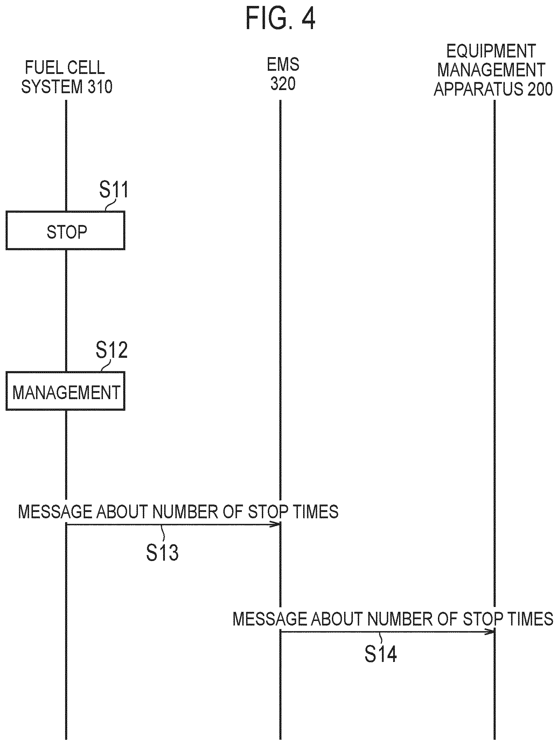

As illustrated in Fig. 4, the fuel cell system 310 is stopped by the above-described normal stop (including manual stop and automatic stop) or abnormal stop (including manual stop and automatic stop) in Step S11.

In Step S12, the fuel cell system 310 manages information related to the number of stop times of the fuel cell system 310.

In Step S13, the fuel cell system 310 transmits a message about the number of stop times to the EMS 320.

In Step S14, the EMS 320 transmits the message about the number of stop times to the equipment management apparatus 200. Step S14 may be omitted.

In a sequence illustrated in Fig. 4, the message about the number of stop times is transmitted to the EMS 320. However, an embodiment is not limited to this. The fuel cell system 310 may transmit the message about the number of stop times to the equipment management apparatus 200 not through the EMS 320 or may transmit the message about the number of stop times to the predetermined terminal 400. The fuel cell system 310 may output the information related to the number of stop times to the remote controller.

### (Action and effect)

In the embodiment, the fuel cell system 310 is configured to manage information related to the number of stop times and to output the information related to the number of stop times. Thus, it is possible to appropriately grasp a state of the fuel cell system 310 in a viewpoint related to the number of stop times.

### (Other embodiments)

The present invention has been described based on the embodiment described above. However, a statement and the drawings constituting part of the disclosure should not be understood as limiting the present invention. This disclosure will clarify a variety of alternative embodiments, examples, and operation techniques for a person skilled in the art.

In the embodiment, the manager 210 is provided in the equipment management apparatus 200, but the embodiment is not limited to this. For example, the manager 210 may be provided in a server connected to the equipment management apparatus 200 via the network 120.

In the embodiment, a case where a management entity of the information related to the number of stop times is the control board 157 is exemplified. However, an embodiment is not limited to this. A management entity may be the EMS 320 or the equipment management apparatus 200. In a case where a management entity is the EMS 320 or the equipment management apparatus 200, it may be considered that an output entity of the information related to the number of stop times is also the EMS 320 or the equipment management apparatus 200. The EMS 320 or the equipment management apparatus 200 may be considered to configure a part of a fuel cell system.

In the embodiment, the fuel cell system 310 performs communication with the equipment management apparatus 200 through the EMS 320. However, an embodiment is not limited to this. No EMS 320 may be provided, and a fuel cell system 310 may communicate with an equipment management apparatus 200 directly.

Although not specifically mentioned in the embodiment, the EMS 320 provided in the facility 300 may not be necessarily provided in the facility 300. For example, a part of a function of the EMS 320 may be provided by a cloud server provided in the Internet. That is, it may be considered that a local control apparatus 360 includes a cloud server. The EMS 320 may be considered as the above-described power management server.

In the embodiment, a case where information related to the number of stop times is the number of stop times itself or the remaining number of stop times is exemplified. However, an embodiment is not limited to this. Information related to the number of stop times may be the number of times of activation or the remaining number of times of activation. Since activation and a stop have a relationship of two sides of the same coin, the number of times of activation has substantially the same meaning with the number of stop times. In such a case, a "stop" in the embodiment is replaced with "activation."

Also, even after the fuel cell system 310 is installed in the facility 300, information related to the number of stop times may be reset in a case where existing fuel cell equipment 150 is changed to new fuel cell equipment 150 by maintenance. That is, information related to the number of stop times may be information related to the number of stop times of the fuel cell system 310 from a moment at which replacement with the new fuel cell equipment 150 is performed. In such a case, a management entity of information related to the number of stop times may manage information related to the number of stop times of the new fuel cell equipment 150 while keeping storing information related to the number of stop times of the existing fuel cell equipment 150, or may update the information related to the number of stop times of the existing fuel cell equipment 150 to the information related to the number of stop times of the new fuel cell equipment 150.

The fuel cell equipment 150 is a solid oxide fuel cell (SOFC). However, the fuel cell equipment 150 may be a polymer electrolyte fuel cell (PEFC), a phosphoric acid fuel cell (PAFC), or a molten carbonate fuel cell (MCFC).

Note that Japanese Patent Application No. 2017-146468 (filed on July 28, 2017) is incorporated in the present description by reference in its entirety.

## Claims

1. A fuel cell system comprising:
a controller configured to manage information related to a number of stop times of the fuel cell system; and
an output unit configured to output the information related to the number of stop times.

2. The fuel cell system according to claim 1, wherein the output unit is configured to transmit, to a management apparatus connected to the fuel cell system through a narrow area network, a message indicating the information related to the number of stop times.

3. The fuel cell system according to claim 1 or claim 2, wherein the output unit is configured to transmit, to a management apparatus connected to the fuel cell system through a wide area network, a message indicating the information related to the number of stop times.

4. The fuel cell system according to any one of claim 1 to claim 3, further comprising a remote controller operated by a user, wherein
the output unit is configured to output, to the remote controller, the information related to the number of stop times.

5. The fuel cell system according to any one of claim 1 to claim 4, wherein the number of stop times includes a number of normal stop times in which the fuel cell system performs a normal stop.

6. The fuel cell system according to claim 5, further comprising fuel cell equipment in which an upper limit of the number of normal stop times is set.

7. The fuel cell system according to any one of claim 1 to claim 6, wherein the number of stop times includes a number of abnormal stop times in which the fuel cell system performs an abnormal stop.

8. The fuel cell system according to claim 7, further comprising a fuel cell equipment in which an upper limit of the number of abnormal stop times is set.

9. The fuel cell system according to claim 8 referring to claim 6, wherein the upper limit of the number of normal stop times is larger than the upper limit of the number of abnormal stop times.

10. The fuel cell system according to any one of claim 1 to claim 9, wherein the output unit is configured to:
output the information related to the number of stop times in response to a stop of the fuel cell system;
periodically output the information related to the number of stop times;
output the information related to the number of stop times in response to a request; or
output the information related to the number of stop times when the information related to the number of stop times satisfies a predetermined condition.

11. An equipment management method comprising:
a step A of managing information related to a number of stop times of a fuel cell system; and
a step B of outputting the information related to the number of stop times.

12. The equipment management method according to claim 11, wherein the step B includes steps of:
outputting the information related to the number of stop times in response to a stop of the fuel cell system;
periodically outputting the information related to the number of stop times;
outputting the information related to the number of stop times in response to a request; or
outputting the information related to the number of stop times when the information related to the number of stop times satisfies a predetermined condition.

13. A management apparatus connected to a fuel cell system through at least one of a narrow area network and a wide area network, the management apparatus comprising:
a receiver configured to receive, from the fuel cell system, a message indicating information related to a number of stop times.

14. An equipment management system comprising:
a fuel cell system; and
a management apparatus connected to the fuel cell system through at least one of a narrow area network and a wide area network, wherein the equipment management system comprising:
a controller configured to manage information related to a number of stop times of the fuel cell system; and
an output unit configured to transmit, to the management apparatus, a message indicating the information related to the number of stop times.
